# EUROPEAN PATENT SPECIFICATION

(11) **EP 3 294 936 B1**
(45) Date of publication and mention of the grant of the patent: **19.06.2019**
(21) Application number: 16721665.4
(22) Date of filing: 19.04.2016
(51) Int. Cl.: D01D 5/32, D01D 5/42, D01F 8/00, D01F 8/06, C04B 16/06, C04B 20/00

(54) **USE OF A COMPOSITE FIBRE IN INORGANIC BINDER COMPOSIIONS**
VERWENDUNG EINER VERBUNDFASER IN ANORGANISCHEN BINDEMITTELN
UTILISATION D'UNE FIBRE COMPOSITE DANS DES COMPOSITIONS DE LIANTS INORGANIQUES

(30) Priority: 08.05.2015 EP 15166895
(43) Date of publication of application: 21.03.2018
(73) Proprietor: Construction Research & Technology GmbH, 83308 Trostberg (DE)
(72) Inventor: WALTHER, Burkhard, 83373 Taching am See (DE); FEICHTENSCHLAGER, Bernhard, 83278 Traunstein (DE)
(74) Representative: BASF IP Association
(86) International application number: PCT/EP2016/058596
(87) International publication number: WO 2016/180605

(56) References cited:
- EP-A1- 1 010 783
- WO-A1-03/057954
- WO-A1-2008/079059
- GB-A- 1 132 641
- JP-A- 2012 193 076
- US-A- 4 814 131

## Description

### Field of Invention

Fiber containing composite materials find widespread use for example in coatings, floor coverings, tires, synthetic leather, and in cementitous or inorganic binder composites for reinforcement, cracking-control and shrinkage reduction. When short fiber filaments or bundles or generally fiber filaments of varying lengths are used or need to be dosed and mixed into a composite mixture, the handling of such fiber preparations tends to be difficult. Fibers have the property to assemble into fiber-balls, -clusters or -nests and therefore generally show low dispersability in mixtures. Especially when small fiber filaments, such as microfiber, are applied the respective dispersability of the fibers in inorganic binder slurries is challenging. This problem is most evident for short polymeric fibers that are of commercial interest because of their better durability compared to steel-fibers.

Cut staple fibers are used in a variety of applications ranging from textiles, non-wovens, carpets, upholstery, filters, reinforcements for composites, or even hydraulic fracturing among many others. In all of these applications the dry staple fibers are difficult to handle due to the large volume of randomly oriented individual fiber filaments. Also, their ability to get airborne may pose a health hazard due to inhalation (e.g. asbestos, glass fibers, polymeric fibers etc.) and cause respiratory diseases or even cancer in humans handling such fibrous material.

In order to facilitate safe handling the fibers are used as or in suspension, either in aqueous or organic solvents, or polymeric/resin media. In order to make the fiber suspensions, the fiber is added into mixing tanks from bags. Effective mixing is required for proper dispersion, especially with glass or polymer fibers in organic media or hydrophobic fiber in water. Under these conditionsthey have a natural tendency to cluster and unevenly distribute throughout the media matrix.. Generally dispersing aids may be employed. Additionally rheology modifiers may be added to the suspension in order to obtain pumpable suspensions.

US 5,019,211 discloses temperature sensitive bicomponent synthetic fiber that curl when heated for making creped tissue webs. These fibers are utilized in the paper industry to increase the bulk of cellulosic fiber products.

JP2000203906 describes fiber for reinforcing cement, wherein the fibers are covered or coated by a decomposable resin. The resulting fiber is of coiled, elliptical or polygonal shape. The procedure though is hampered by the complicated and demanding preparation of the fibrous material.

EP 2206848 discloses capsules made from fiber formed as coiled elements that are further wrapped or covered with water-soluble glue. The capsules are used for the introduction of reinforcing fiber during production of reinforced concrete. The capsules are added to dry concrete mixtures, distribute evenly and after the addition of water loose the covering capsule and thereby release the fiber into the concrete mixture. This method is also characterized to be demanding since it requires several preparatory steps, like the initial coiling of fiber followed by capsule preparation.

US4814131 discloses composite fibres comprising a hydrophobic polymer and a hydrophilic polymer.

GB1132641 discloses crimped slit fibres made by cutting a stretched film.

The present state of the art technology therefore does not provide or achieve simple and satisfactory dispersion of reinforcement fiber in any concrete or inorganic binder mixture. In many cases cluster of unevenly distributed fiber lead to insufficient reinforcement performance and potentially negative appearance of the surface of respective cured concrete products. Thus, there is the continued need to improve and provide simple, safe, cost efficient and effective preparation, handling, delivery, and dispersion of short staple fibers for use in slurry preparations in general and for inorganic binder mixture in particular.

### Background of invention

This invention deals with the fundamental issue that appears when short fibers are used in inorganic binder formulations or mixtures, such as cementitious, binder mixtures, incl. alumosilicate, gypsum, or geopolymer-based mixtures. In principle, the performance of the resulting cementitious fiber composites with regard to stability could basically be improved simply by adding higher amounts of fiber or increasing the length of the fiber filaments. Longer fibers result in a higher interfacial friction (fiber bridging strength) and thus higher pull-out resistance in the final composite. However this also influences the rheology of the inorganic binder mixtures. The flowability and thus workability of the mixture decreases dramatically upon increasing fiber content or fiber length.

Also the tensile strain capacity of the resulting cured inorganic binder material is closely associated with fiber dispersion and ultimately determines the fiber bridging strength. There is a close correlation between rheological parameters, i.e. flow rate and plastic viscosity of mortar or concrete, and fiber content and degree of fiber dispersion.

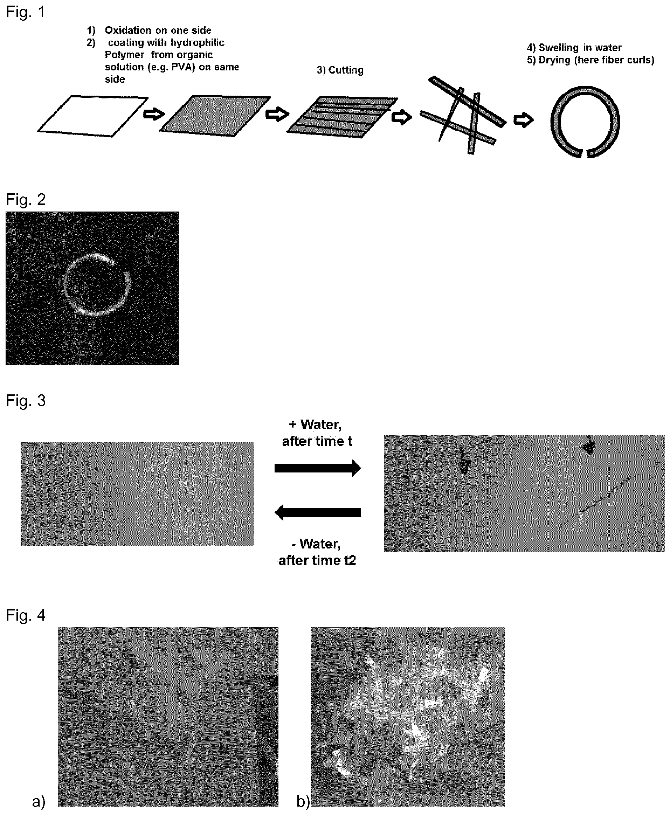

By influencing the degree of fiber dispersion in the inorganic binder mixtures the micromechanics of the material may be tailored to optimize the rheological properties of the respective material. This problem may be solved in providing a methodology of ingredient-tailored approach combined with improved chemistry for rheology control of inorganic binder mixtures. This approach is schematically shown in Fig. 1.

Basically a multicomponent fiber is used in the present invention. Such multicomponent fibers are composed of at least two components distributed over the entire length of the fiber. Each component may have different physical or chemical properties and may belong to either the same type of polymer or be a totally different polymer type. A bicomponent fiber may for example be obtained by either coextruding two polymers into one single strand, the different properties of both polymers are thereby combined. The resulting newly created bicomponent fiber will have new properties and may be applied in a variety of different applications. The properties and possible applications depend on both the properties of the individual polymer components and the combination of the different polymers and potential additives, as well as on the configuration of the final multicomponent fiber. According to the present invention, such a multicomponent fiber is obtained by layering or sandwiching at least two or more polymer species over each other and slicing the resulting foil into individual fiber elements. Generally the separate polymers occupy an equal part of the fiber surface. Depending on the chosen polymers, the fiber may develop more crimp than other possible configurations of multicomponent fibers, such as sheath/core, pie wedge, island/sea or other possible configurations or combinations of individual polymer components. Thereby it is possible to produce a tape-fiber which is hydrophilic on one side and hydrophobic on the other side. The fiber is curled in the dry state and stretches within a certain time span when exposed to water, for example in an inorganic binder slurry, to effect its function as reinforcement component in the cementitious matrix. Based on different hygroscopic expansion coefficients the varying expansion of the polymers under humid conditions leads to an unilateral extension and ultimately to stretching or uncurling of the originally curled fiber. Ultimately the fiber in the curled state and therefore reduced surface area influences the rheology less than a stretched fiber with exposed surfaces. Consequently higher fiber contents in inorganic binder slurries, or general in any slurry type, under maintainance of workability are possible.

### Description of the Invention

Described herein are solutions to the problem related to managing volume issues of and for handling polymer fibers, such as short and/ or cut staple fibers. In one embodiment, the polymer fibers are hydrophobic polymer fibers. In another embodiment, the staple fibers are compacted into bundles using an adhesive or binder.

For the experiments a uniaxially stretched polypropylene (PP) sheet with 40 micron thickness was used. Alternatively other dimensions or any polyolefin such as polyethylene (PE) may also be used. The hydrophilic coating on one side was realized by initially oxidizing this one side of the sheet with, for example, persulfate, permanganate, dichromate, ozone, electrochemically, via plasma-treatment or any other method of oxidizing applicable by a skilled person. The oxidation is necessary to provide adhesion of a second polymer. The second polymer, selected from a hydrophilic and swellable polymer such as polyvinylalcohol (PVA), polyacrylic acid (PA) to name only two, but not excluding any other hydrophilic and swellable polymer, was applied from solution onto the oxidized side of the polymer sheet, thereby creating a layer on top of this first polymer sheet. BaSO₄ or other inorganic fillers may be added to the polymer layer to tune the density. Generally any material with a density over 1.0 gram per liter may be used. In an alternative embodiment the sheet was then cut in the pre-stretched direction (Fig.1) to obtain individual fiber elements. The hydrophilic polymer layer has the function to uptake and release water and thus swell or shrink under the respective conditions. This leads to reversible stretching and curling of the bicomponent fiber. Depending on layer thickness the fiber curls and in some cases with more than one loop. As the skilled person will recognize the bicomponent fibers used in the present invention as described above are composed of at least two components, but may als be composed of more than two, such as three or more layersthat are arranged in a layered or sandwich-like structure, i.e the fiber elements resemble layered or sandwich-structured composites. Further, in the bicomponent, two-layered situation the ratio of the layer thickness of the first or upper layer to second or lower layer is generally in the range of 1 to 2 or more, but not greater than 3.

The resulting multicomponent fibers were added to cementitious slurry preparations revealing good initial flowability of such cementitious slurry preparations with sustained uniform distribution of the fiber in the cementitious matrix. The workability of the fiber containig cementitious slurry preparations can be maintained where the fiber content lies in the range of 0.5 to at least 5 weight percent, optimally in the range of 1 to 3 weight percent.

### Examples

The bicomponent fiber preparation comprises the following steps:
Step 1) Selection of polypropylene (PP)-sheet
   Two different thicknesses of uniaxially oriented PP sheets, 100 micron and 40 micron thick, were selected for fiber production.
Step 2) Unilateral hydrophilation of PP-foil
   In alternative experiments selected sheets were treated with 5 % dipotassiumperoxodisulphate, 5% potassiumpermanganate, or 1% potassiumdichromate solution for 2 - 6 hours at 60 - 80 °C (6h at 60°C or for 2h at 80°C). Afterwards the surface was washed with water and the treated side of the sheet had turned hydrophilic.
Step 3) The hydrophilic side of the sheet was coated with a hydrophilic polymer (water soluble or non-soluble) selected from a polyvinylalcohol (PVA), polyacrylic acid (PA) or the like.

### Example 1:

A 40 micron thick PP sheet oxidized with 5% dipotassiumperoxodisulphate solution for 6h at 60°C was coated with an aqueous saturated solution of polyvinylalcohol (e.g. Mowiol 4-88; Kuraray Ltd.) and dried at 70°C. After this procedure the sheet was longitudinal cut into fibers which curled or curled immediately (Fig.2). The resulting ring-like-fiber elements uncurled or stretched after 30 min. - 60 min. when put into water. (Fig. 3). When doubling the amount of hydrophilic polymer solution the resulting layer on the PP was doubled in thickness, resulting in a stronger curling effect and a longer time (more than 60min) for uncurling when placed in water.

### Example 2:

A 100 micron thick PP sheet oxidized with 5% dipotassiumperoxodisulphate solution for 6h at 60°C was coated with an aqueous saturated solution of polyvinylalcohol (e.g. Mowiol 4-88; Kuraray Ltd.) plus 10% barium sulfate powder and dried at 70°C. After this procedure the sheet was cut into fibers in the longitudinal direction which immediately curled. When these curled, ring-like fibers were put into water, they uncurled or stretched.

### Example 3:

A 40 micron thick PP foil oxidized with 5% dipotassiumperoxodisulphate solution for 6h at 60°C was coated with an aqueous saturated solution polyacrylic acid (e.g. Sokalan PA 40 or Sokalan CP 12 S; BASF SE) and dried at 70°C. After this procedure the sheet was cut into fibers in the longitudinal direction which immediately curled. When these ring-like-fibers were placed into water, they uncurled or stretched as described above.

### Example 4:

A 40 micron thick PP foil oxidized with 5% dipotassiumperoxodisulphate solution for 6h at 60°C was coated with an aqueous saturated solution polyacrylic acid (e.g. Sokalan PA 40 or Sokalan CP 12 S from BASF SE) plus 10% barium sulfate powder and dried at 70°C. After this procedure the sheet was cut into fibers in the longitudinal direction which immediately curled. When these ring-like-fibers were placed into water, they uncurled or stretched as above.

### Example 5:

A 40 micron thick PP sheet was oxidized with 5% dipotassiumperoxodisulphate solution for 6h at 60°C and subsequently coated with a dispersion of polyvinylacetate-co-polyethylene and dried at 70°C. After this procedure the sheet was cut into fibers in the longitudinal direction which immediately curled. When these ring-like-fibers were placed into water, they uncurled or stretched as described above.

### Example 6:

As in Examples 1 to 6 a 40 micron thick PP sheet as a first polymer will be oxidized with 5% dipotassiumperoxodisulphate solution for 6h at 60°C and will be coated with an aqueous saturated solution of a second polymer such as polyvinylalcohol (e.g. Mowiol 4-88; Kuraray Ltd.) in varying thicknesses of up to 120 microns or, alternatively, the PP sheet will be coated with an aqueous saturated solution polyacrylic acid (e.g. Sokalan PA 40 or Sokalan CP 12 S; BASF SE) in varying thicknesses of up to 120 microns or alternatively the PP sheet will be coated with a dispersion of polyvinylacetate-co-polyethylene in varying thicknesses of up to 120 microns and in each case the resulting sheets will be dried at approximately 70°C. 10% barium sulfate powder can optionally be added to the solutuin of the second polymer. After this procedure the obtained sheets will be cut into fibers in the longitudinal direction which immediately will curl. When these ring-like-fibers are placed into water, they will uncurl or stretch as described above.

### Application Test

Within an application test the rheological behavior of the fiber used in the present invention was compared to standard fiber in a mortar formulation.

As cementitious matrix a high density mortar formulation was used to give a high strength matrix for composites Therefore 430 g Portland cement (CEM I, Schwenk Zement KG, Mergelstetten), 880 g Mineral Coal Fly Ash (L-10, Evonik Industries), 150 g quartz sand (0-0.3 mm), 150 g quartz flour (W12), 300 g water and 4.3 g superplastiziser (Melflux 2641; BASF), as well as 0.5 g stabilizer (Melvis F40; BASF) were mixed.

Fibers prepared according to example 1 were used. The cut fibers had a dimensions of 40 mm x 1.5 mm (Fiber 2, Fig. 4). As comparative example untreated fiber with the same dimensions was used (Fiber 1, Fig. 4).

The mortar mix was prepared and the fibers mixed into the slurry resulting in a 1 weight% fiber dispersion in cementitious slurry. It may be envisaged to add up to 5 weight % of fiber to cementitious compositions with retained workability of the the resulting slurry.The slump-flow-test was performed using a Haegermann Funnel on the basis of DIN 1060 und 1164 standards:

### Results:

Spread Value of pure mortar matrix: 313 mm
Spread Value of untreated fiber containing slurry: 282 mm
Spread Value of invented fiber containing slurry: 305 mm

Upon addition of standard, extended fiber the flowability and workability of the mortar decreases substantially, generally more than 10%. In comparison the workability of the slurry containing inventive curled bicomponent fibers the workability only decreases by not more than 10 %. These results illustrate the unexpected improvement of flowability and workability of curled fiber containing cementitious binder slurries compared to conventional untreated fiber sample. It will be appreciated that these examples are solely for illustrative purposes and are not to be construed as limiting the scope of this invention.

### Brief Description of the Drawings

Fig. 1: Schematic representation of generation of splice-fibers from an oriented PP sheet that was hydrophilically coated on one side and curled upon drying.
Fig. 2: A curled fiber after drying.
Fig. 3: Spliced fibers obtained from an unilaterally hydrophilic coated and oriented PP sheet that curled upon drying.
Fig. 4: Fiber 1 (a), Fiber 2 (b)

## Claims

1. Use of a bicomponent fiber comprising a first hydrophobic polymer, preferably selected from polyolefins, and a second hydrophilic polymer, preferably selected from polyvinyl alcohol or polyacrylic acid, as an additive in inorganic binder formulations or compositions, wherein said bicomponent fiber is obtainable by a process comprising the following steps:
- uniaxially stretching a sheet of a first polymer,
- oxidizing one side of a sheet of said first polymer,
- coating the oxidized side of a sheet of said first polymer with said second polymer,
- drying the resulting bicomponent substrate,
- cutting the dried bicomponent substrate into fibers of desired dimensions.

2. Use according to Claim 1, wherein the first hydrophobic polymer is polypropylene and the second hydrophilic polymer is polyvinyl alcohol.

3. Use according to Claim 1, wherein the ratio of the layer thickness of the first or upper layer to second or lower layer is not greater than three.

4. Use according to Claim 1, wherein the inorganic binder formulations or compositions comprises cement, aluminosilicate, gypsum or geopolymer-based binders.

5. Use according to Claim 1 to control the rheology of hydraulic binder compositions.

6. Use according to Claim 1 in the field of civil engineering.

## Patentansprüche

1. Verwendung einer Bikomponentenfaser, die ein erstes, hydrophobes Polymer, vorzugsweise ausgewählt aus Polyolefinen, und ein zweites, hydrophiles Polymer, vorzugsweise ausgewählt aus Polyvinylalkohol und Polyacrylsäure, umfasst, als Zusatzstoff in anorganischen Bindemittelformulierungen oder -zusammensetzungen, wobei die Bikomponentenfaser durch ein Verfahren erhältlich ist, das folgende Schritte umfasst:
- uniaxiales Strecken einer Bahn eines ersten Polymers,
- Oxidieren einer Seite einer Bahn des ersten Polymers,
- Beschichten der oxidierten Seite einer Bahn des ersten Polymers mit dem zweiten Polymer,
- Trocknen des erhaltenen Bikomponentensubstrats,
- Schneiden des getrockneten Bikomponentensubstrats zu Fasern mit gewünschten Abmessungen.

2. Verwendung gemäß Anspruch 1, wobei das erste, hydrophobe Polymer Polypropylen ist und das zweite, hydrophile Polymer Polyvinylalkohol ist.

3. Verwendung gemäß Anspruch 1, wobei das Verhältnis der Schichtdicke der ersten oder oberen Schicht zu der zweiten oder unteren Schicht nicht größer als drei ist.

4. Verwendung gemäß Anspruch 1, wobei die anorganischen Bindemittelformulierungen oder -zusammensetzungen Zement, Aluminosilicat, Gips oder Bindemittel auf Geopolymerbasis umfassen.

5. Verwendung gemäß Anspruch 1 zum Steuern der Rheologie von hydraulischen Bindemittelzusammensetzungen.

6. Verwendung gemäß Anspruch 1 auf dem Gebiet des Bauwesens.

## Revendications

1. Utilisation d'une fibre à deux composants comprenant un premier polymère hydrophobe, préférablement sélectionné parmi des polyoléfines, et un deuxième polymère hydrophile, préférablement sélectionné parmi l'alcool polyvinylique ou l'acide polyacrylique, comme additif dans des formulations ou des compositions de liants inorganiques, dans laquelle ladite fibre à deux composants peut être obtenue par un procédé comprenant les étapes suivantes :
- l'étirage uniaxial d'une feuille d'un premier polymère,
- l'oxydation d'un côté d'une feuille dudit premier polymère,
- le revêtement du côté oxydé d'une feuille dudit premier polymère avec ledit deuxième polymère,
- le séchage du substrat à deux composants ainsi obtenu,
- le découpage du substrat à deux composants séché en fibres de dimensions souhaitées.

2. Utilisation selon la revendication 1, dans laquelle le premier polymère hydrophobe est un polypropylène et le deuxième polymère hydrophile est l'alcool polyvinylique.

3. Utilisation selon la revendication 1, dans laquelle le rapport de l'épaisseur de couche de la première couche ou couche supérieure contre la deuxième couche ou couche inférieure n'est pas supérieur à trois.

4. Utilisation selon la revendication 1, dans laquelle les formulations ou compositions de liants inorganiques comprennent un ciment, un aluminosilicate, un gypse, ou des liants à base de géopolymères.

5. Utilisation selon la revendication 1 pour contrôler la rhéologie de compositions de liants hydrauliques.

6. Utilisation selon la revendication 1 dans le domaine du génie civil.
